# EUROPEAN PATENT APPLICATION

(11) **EP 4 722 769 A1**
(43) Date of publication of application: **08.04.2026**
(21) Application number: 23938205.4
(22) Date of filing: 30.10.2023
(51) Int. Cl.: G02B 6/00, G02B 27/01

(54) **LIGHT-GUIDING DEVICE, OPTICAL MODULE AND HEAD-MOUNTED DISPLAY DEVICE**

(30) Priority: 25.05.2023 CN 202310601552
(71) Applicant: Goertek Optical Technology (Shanghai) Co., Ltd., Shanghai 201109 (CN)
(72) Inventor: WEI, Rudong, Shanghai 201109 (CN); RAO, Yi, Shanghai 201109 (CN); WU, Xiao, Shanghai 201109 (CN); DONG, Lichao, Shanghai 201109 (CN); CHENG, Xin, Shanghai 201109 (CN); SHEN, Lang, Shanghai 201109 (CN); DAI, Jie, Shanghai 201109 (CN)
(74) Representative: Rau, Schneck & Hübner Patentanwälte Rechtsanwälte PartGmbB
(86) International application number: PCT/CN2023/127525
(87) International publication number: WO 2024/239537

(57) **Abstract**

Embodiments of the present disclosure provide a light-guiding device, an optical module and a head-mounted display device; wherein, the light-guiding device includes a waveguide substrate and an in-coupling area and an out-coupling area provided on the waveguide substrate; the in-coupling area is configured for coupling light into the waveguide substrate and enabling the light to propagate via total internal reflection within the waveguide substrate to the out-coupling area; the out-coupling area is configured for coupling out the light propagating thereto, and includes a plurality of out-coupling grating unit cells that are capable of coupling out light of one or more different wavebands, wherein the plurality of out-coupling grating unit cells form a discrete distribution within the out-coupling area, and wherein a gap is provided between adjacent ones of the out-coupling grating unit cells. The solution provided by the embodiments of the present disclosure can improve the optical performance of the optical waveguide.

## Description

### CROSS-REFERENCE TO RELATED APPLICATIONS

The present disclosure claims priority to a Chinese patent application No. 202310601552.7 filed with the CNIPA on May 25, 2023 and entitled "LIGHT-GUIDING DEVICE, OPTICAL MODULE AND HEAD-MOUNTED DISPLAY DEVICE", which is hereby incorporated by reference in its entirety.

### TECHNICAL FIELD

Embodiments of the present disclosure relate to the technical field of optical imaging, and particularly to a light-guiding device, an optical module and a head-mounted display device.

### BACKGROUND

The optical waveguide device is a core component of Augmented Reality (AR) apparatus. The optical waveguide device primarily utilizes the principle of total internal reflection to achieve light transmission and, combined with diffractive optical elements, realizes directional propagation of light, thereby guiding the imaging light to the human eye, enabling the user to view the projected image. To meet the usage requirements of users with different interpupillary distances, a light waveguide in an AR apparatus, while satisfying light transmission, must further have a pupil-expansion effect.

In current diffractive optical waveguide designs, partitioning of the out-coupling area is typically achieved by implementing partitioned parameter design on a single out-coupling grating. However, partitioned design of grating parameters increases the processing difficulty in fabrication, and especially when the partitioning involves parameters such as depth and angle of a grating, the processing difficulty becomes even greater.

### SUMMARY

An objective of the present disclosure is to provide a new technical solution for a light-guiding device, an optical module and a head-mounted display device, which can significantly reduce the difficulty in partitioning of the out-coupling area.

In a first aspect, the present disclosure provides a light-guiding device. The light-guiding device comprises a waveguide substrate and an in-coupling area and an out-coupling area provided on the waveguide substrate;
the in-coupling area is configured for coupling light into the waveguide substrate and enabling the light to propagate via total internal reflection within the waveguide substrate to the out-coupling area;
the out-coupling area is configured for coupling out the light propagating thereto, and comprises a plurality of out-coupling grating unit cells that are capable of coupling out light of one or more different wavebands, wherein the plurality of out-coupling grating unit cells form a discrete distribution within the out-coupling area, and wherein a gap is provided between adjacent ones of the out-coupling grating unit cells.

Optionally, a size of the gap is ≤ 4 mm.

Optionally, the waveguide substrate is further provided with a pupil-expansion turning area, which is located between the in-coupling area and the out-coupling area, and is configured for performing pupil-expansion on the light coupled into the waveguide substrate and for propagating the light to the out-coupling area;
wherein the pupil-expansion turning area comprises a plurality of pupil-expansion grating unit cells, which form a discrete distribution within the pupil-expansion turning area and are capable of coupling out the light of one or more different wavebands.

Optionally, an area of each of the out-coupling grating unit cells and the pupil-expansion grating unit cells ranges from 0.01 mm² to 400 mm².

Optionally, a filter coating is provided between each of the out-coupling grating unit cells and the waveguide substrate; wherein each type of the filter coating only allows light of a corresponding one waveband to pass through; or,
the out-coupling grating unit cells are holographic volume gratings.

Optionally, the waveguide substrate is a single-layer color optical waveguide structure, and the plurality of out-coupling grating unit cells are distributed discretely in a target area on one surface of the waveguide substrate.

Optionally, at least two different out-coupling grating unit cells are present among the plurality of out-coupling grating unit cells, and the at least two different out-coupling grating unit cells each correspond to light of a respective one color in a virtual image.

Optionally, the out-coupling area comprises a plurality of first out-coupling grating unit cells, a plurality of second out-coupling grating unit cells, and a plurality of third out-coupling grating unit cells distributed discretely;
wherein the plurality of first out-coupling grating unit cells are configured for coupling out red light, the plurality of second out-coupling grating unit cells are configured for coupling out green light, and the plurality of third out-coupling grating unit cells are configured for coupling out blue light.

Optionally, the waveguide substrate is a multi-layer color optical waveguide structure, which comprises at least two waveguide layers, and each waveguide layer is configured for totally reflecting and transmitting light of one or more wavebands coupled therein; and
each waveguide layer is provided with a sub-out-coupling area, each sub-out-coupling area constitutes the out-coupling area, and each sub-out-coupling area comprises the plurality of the out-coupling grating unit cells distributed discretely; and, in a thickness direction of the waveguide substrate, the out-coupling grating unit cells on different waveguide layers are staggered from one another.

Optionally, the waveguide substrate comprises a first waveguide layer, a second waveguide layer, and a third waveguide layer, which are stacked and are configured for propagating red light, green light, and blue light, respectively;
the out-coupling area comprises a plurality of first out-coupling grating unit cells, a plurality of second out-coupling grating unit cells, and a plurality of third out-coupling grating unit cells, the first out-coupling grating unit cells are provided on the first waveguide layer, the second out-coupling grating unit cells are provided on the second waveguide layer, the third out-coupling grating unit cells are provided on the third waveguide layer, and the first out-coupling grating unit cells, the second out-coupling grating unit cells, and the third out-coupling grating unit cells are staggered from one another in the thickness direction of the waveguide substrate; and
the first out-coupling grating unit cells are configured for coupling out the red light, the second out-coupling grating unit cells are configured for coupling out the green light, and the third out-coupling grating unit cells are configured for coupling out the blue light.

Optionally, the waveguide substrate comprises a first waveguide layer and a second waveguide layer which are stacked, and the first waveguide layer is configured for transmitting red light, and the second waveguide layer is configured for transmitting green light and blue light;
the out-coupling area comprises a plurality of first out-coupling grating unit cells and a plurality of second out-coupling grating unit cells, the first out-coupling grating unit cells are provided on the first waveguide layer, the second out-coupling grating unit cells and the third out-coupling grating unit cells are both provided on the second waveguide layer, and the first out-coupling grating unit cells, the second out-coupling grating unit cells, and the third out-coupling grating unit cells are staggered from one another in the thickness direction of the waveguide substrate; and
the first out-coupling grating unit cells are configured for coupling out the red light, and the second out-coupling grating unit cells are configured for coupling out the green light and the blue light.

In a second aspect, the present disclosure provides an optical module. The optical module comprises:
the light-guiding device according to the first aspect; and
a light engine configured for projecting light or an image into the light-guiding device.

In a third aspect, the present disclosure provides a head-mounted display device. The head-mounted display device comprises:
a housing; and
the optical module according to the second aspect.

The beneficial effects of the present disclosure are as follows:
The light-guiding device provided according to the embodiments of the present disclosure is a diffractive optical waveguide solution, in which a plurality of out-coupling grating unit cells distributed discretely are provided in the out-coupling area, and a single out-coupling grating unit cell is capable of coupling out light of one or more different wavebands. In this way, by reasonably allocating the area size of each out-coupling grating unit cell, it is possible to control the energy of the light coupled out from different areas within the out-coupling area, that is, the diffraction efficiency at different positions within the out-coupling area is regulated by controlling the area of the out-coupling grating unit cells. This design facilitates the reasonable allocation of the energy of the light coupled out from the out-coupling area, and can therefore improve the visual experience.

Other features and advantages of the present disclosure will become apparent from the following detailed description of exemplary embodiments of the present disclosure with reference to the accompanying drawings.

### BRIEF DESCRIPTION OF THE DRAWINGS

In order to clearly illustrate embodiments of the present disclosure or technical solutions in the prior art, accompanying drawings that need to be used in description of the embodiments or the prior art will be briefly introduced as follows. Obviously, drawings in following description are only the embodiments of the present disclosure. For those skilled in the art, other drawings can also be obtained according to the disclosed drawings without creative efforts.
FIG. 1 is a structural schematic diagram of a light-guiding device provided by an embodiment of the present disclosure;
FIG. 2 is a top view of a light-guiding device provided by an embodiment of the present disclosure;
FIG. 3 is a top view of another light-guiding device provided by an embodiment of the present disclosure;
FIG. 4 is a top view of yet another light-guiding device provided by an embodiment of the present disclosure;
FIG. 5 is a plurality of structural schematic diagrams of combined grating unit cells formed on a waveguide layer provided by an embodiment of the present disclosure;
FIG. 6 is a structural schematic diagram of an out-coupling area of a light-guiding device provided by an embodiment of the present disclosure.

### Description of reference signs:

1: waveguide substrate; 11: first waveguide layer; 12: second waveguide layer; 13: third waveguide layer; 2: in-coupling area; 3: out-coupling area; 31: first out-coupling grating unit cell; 32: second out-coupling grating unit cell; 33: third out-coupling grating unit cell; 4: pupil-expansion turning area; 41: pupil-expansion grating unit cell; 5: filter coating; 01: red light; 02: green light; 03: blue light; 001: human eye.

### DETAILED DESCRIPTION

Various exemplary embodiments of the present disclosure will now be described in detail with reference to the accompanying drawings. It is to be noted that unless otherwise specified, the scope of present disclosure is not limited to relative arrangements, numerical expressions and values of components and steps as illustrated in the embodiments.

Description to at least one exemplary embodiment is for illustrative purpose only, and in no way implies any restriction on the present disclosure or application or use thereof.

Techniques and devices known to those skilled in the prior art may not be discussed in detail; however, such techniques and devices shall be regarded as part of the description where appropriate.

In all the examples illustrated and discussed herein, any specific value shall be interpreted as illustrative rather than restrictive. Different values may be available for alternative examples of the exemplary embodiments.

It is to be noted that similar reference numbers and alphabetical letters represent similar items in the accompanying drawings. In the case that a certain item is identified in a drawing, further reference thereof may be omitted in the subsequent drawings.

Below, in conjunction with the drawings, the light-guiding device, optical module, and head-mounted display device provided by the embodiments of the present disclosure will be described in detail.

According to one aspect of the embodiments of the present disclosure, a light-guiding device is provided. The light-guiding device is, for example, a diffractive optical waveguide solution, which may be suitable for application in a wearable device. The wearable device includes a head-mounted display device (HMD), such as an AR head-mounted display device.

Furthermore, specific forms of the head-mounted display device include, for example, smart glasses or smart helmets, etc. The embodiments of the present disclosure do not impose limitations on the specific form of the head-mounted display device.

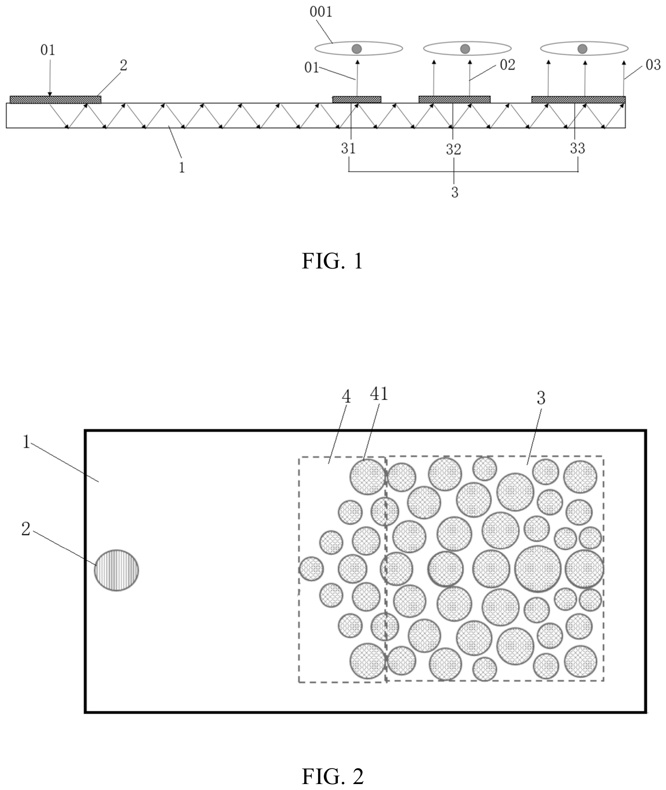

According to one embodiment of the present disclosure, a light-guiding device is provided. Referring to FIG. 1 to FIG. 3, the light-guiding device includes a waveguide substrate 1 and an in-coupling area 2 and an out-coupling area 3 provided on the waveguide substrate 1. The in-coupling area 2 is configured for coupling light into the waveguide substrate 1 and enabling the light to propagate via total internal reflection within the waveguide substrate 1 to the out-coupling area 3. The out-coupling area 3 is configured for coupling out the light propagating thereto. The out-coupling area 3 includes a plurality of out-coupling grating unit cells that are capable of coupling out light of one or more different wavebands. The plurality of out-coupling grating unit cells form a discrete distribution within the out-coupling area 3, and a gap is provided between adjacent ones of the out-coupling grating unit cells.

According to the light-guiding device provided by the above embodiment of the present disclosure, referring to FIG. 1 to FIG. 3, a new partitioned design is applied to the out-coupling area 3 on the waveguide substrate 1. Specifically, the out-coupling area 3 is directly divided into many independent out-coupling grating unit cells. In this way, by allocating the area of each out-coupling grating unit cell, it is possible to control the energy of the light coupled out from different areas within the out-coupling area 3. Compared to the traditional method of achieving partitioning by adjusting grating parameters in different areas within an out-coupling grating, this partitioning method for the out-coupling area in the present disclosure is simpler in process and can reduce the fabrication difficulty of the optical waveguide.

Referring to the out-coupling area 3 shown in FIG. 1, the quantity of light coupled out at the positions of the out-coupling grating unit cells with different area sizes is different. That is to say, the area size of the out-coupling grating unit cell is related to the quantity of coupled-out light. Specifically, if the area of the out-coupling grating unit cell is large, the quantity of coupled-out light is high. And if the area of the out-coupling grating unit cell is small, the quantity of coupled-out light is low.

For example, in the out-coupling area 3 shown in FIG. 1, the out-coupling area 3 includes three out-coupling grating unit cells, defined as a first out-coupling grating unit cell 31, a second out-coupling grating unit cell 32, and a third out-coupling grating unit cell 33, respectively. Here, after sorting by area size, if the first out-coupling grating unit cell 31 < the second out-coupling grating unit cell 32 < the third out-coupling grating unit cell 33, the quantity of light coupled out at the position of the first out-coupling grating unit cell 31 is less than the quantity of light coupled out at the position of the second out-coupling grating unit cell 32, and the quantity of light coupled out at the position of the second out-coupling grating unit cell 32 is less than the quantity of light coupled out at the position of the third out-coupling grating unit cell 33. The partitioning method for the out-coupling area provided by the embodiments of the present disclosure can control the quantity of light coupled out at different positions within the out-coupling area 3 by allocating the area of each out-coupling grating unit cell, thereby achieving a reasonable allocation of the light energy in the out-coupling area.

In the light-guiding device provided by the embodiments of the present disclosure, the out-coupling area 3 includes a plurality of out-coupling grating unit cells. The grating parameters of the plurality of out-coupling grating unit cells may be the same or may be different.

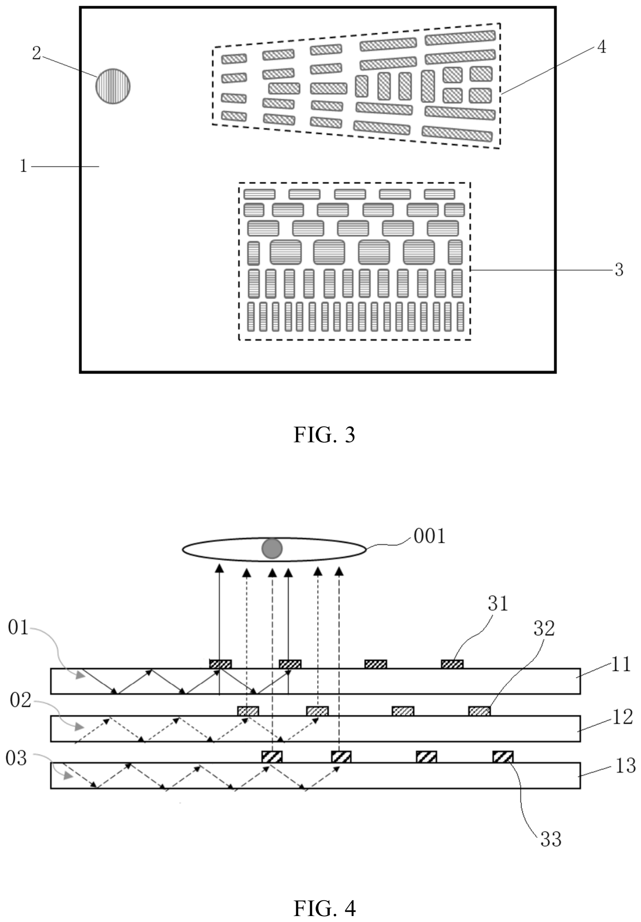

In the light-guiding device provided by the above embodiment of the present disclosure, in order to ensure that the phenomenon of missing images in the out-coupling area does not occur, in the out-coupling area 3, a certain gap needs to be left between adjacent ones of the out-coupling grating unit cells. That is to say, in the out-coupling area 3, the out-coupling grating unit cells are not in close contact with each other, as shown in FIG. 2 and FIG. 3.

The light-guiding device provided according to the embodiments of the present disclosure is a diffractive optical waveguide solution, in which a plurality of out-coupling grating unit cells distributed discretely are provided in the out-coupling area 3, and a single out-coupling grating unit cell is capable of coupling out light of one or more different wavebands. In this way, by reasonably allocating the area size of each out-coupling grating unit cell, it is possible to control the energy of the light coupled out from different areas within the out-coupling area 3, that is, the diffraction efficiency at different positions within the out-coupling area is regulated by controlling the area of the out-coupling grating unit cells. This design facilitates the reasonable allocation of the energy of the light coupled out from the out-coupling area 3, and can therefore improve the visual experience.

The partitioning solution for the out-coupling area provided by the embodiments of the present disclosure increases the degree of freedom in the layout design of the out-coupling area on the light-guiding device, which is beneficial for improving the optical performance of the light-guiding device.

According to some examples of the present disclosure, the plurality of out-coupling grating unit cells form a discrete distribution within the out-coupling area 3, a gap is provided between adjacent ones of the out-coupling grating unit cells, and a size of the gap is ≤ 4 mm.

According to the above example, in the out-coupling area 3, there is a gap between adjacent ones of the out-coupling grating unit cells, and this gap should be designed to be no greater than the size of the human eye pupil. In other words, the gap between adjacent out-coupling grating cells cannot accommodate a circular area of the size of a human eye pupil. Typically, the diameter of the human eye pupil is about 4 mm. Such a design can ensure that the phenomenon of missing of the image missing formed in the out-coupling area 3 does not occur. That is, the human eye 001 can see a complete imaging picture.

In some examples of the present disclosure, referring to FIG. 2 and FIG. 3, the waveguide substrate 1 is further provided with a pupil-expansion turning area 4. The pupil-expansion turning area 4 is located between the in-coupling area 2 and the out-coupling area 3, and is configured for performing pupil-expansion on the light coupled into the waveguide substrate 1 and propagating the light to the out-coupling area 3. Here, the pupil-expansion turning area 4 includes a plurality of pupil-expansion grating unit cells 41, and the plurality of pupil-expansion grating unit cells 41 form a discrete distribution within the pupil-expansion turning area 4. The pupil-expansion grating unit cells 41 are capable of coupling out light of one or more different wavebands.

According to the above example, the pupil-expansion turning area 4 is further introduced on the waveguide substrate 1 of the light-guiding device. The pupil-expansion turning area 4 can be used to project the light from the in-coupling area 2 into the out-coupling area 3 after pupil-expansion, thereby increasing the amount of coupled-out light, which can improve light efficiency and thus improve the clarity of the image.

According to the above example, the pupil-expansion turning area 4 is also in a partitioned design, which includes a plurality of independently provided pupil-expansion grating unit cells 41. The pupil-expansion grating unit cells 41 can be two-dimensional gratings or one-dimensional gratings. The partitioned design of the pupil-expansion turning area 4 may allow the light energy to be reasonably distributed within this area before being incident on the out-coupling area 3, and can cooperate well with the out-coupling area 3, which is beneficial for improving the final imaging quality.

For example, referring to FIG. 2, the pupil-expansion grating unit cells are two-dimensional gratings, and the pupil-expansion turning area 4 is connected to the out-coupling area 3.

As another example, referring to FIG. 3, the pupil-expansion grating unit cells are one-dimensional gratings, and the pupil-expansion turning area 4 is located between the in-coupling area 2 and the out-coupling area 3.

In the embodiments of the present disclosure, the placement of the pupil-expansion turning area 4 is relatively flexible. The pupil-expansion turning area 4 is provided between the in-coupling area 2 and the out-coupling area 3 and is located on the total internal reflection propagation path of the light coupled in via the in-coupling area 2.

In some examples of the present disclosure, an area of each of the out-coupling grating unit cells and the pupil-expansion grating unit cells ranges from 0.01 mm² to 400 mm².

In the light-guiding device provided by the embodiments of the present disclosure, referring to FIG. 2 and FIG. 3, the out-coupling area 3 is constituted by a plurality of out-coupling grating unit cells, and the pupil-expansion turning area 4 is also constituted by a plurality of pupil-expansion grating unit cells. This causes both the out-coupling area 3 and the pupil-expansion turning area 4 to form a discrete grating layout, which provides higher design freedom for the light-guiding device and can simultaneously improve the optical performance of the light-guiding device.

The area size of the out-coupling grating unit cells can be designed, for example, as 0.01 mm² to 400 mm² mentioned in the above example, which facilitates adjusting the energy of the coupled-out light in different areas of the out-coupling area 3 and makes the layout form of the out-coupling area 3 more flexible. The smaller the area of the out-coupling grating unit cell, the less the energy of the coupled-out light; conversely, the larger the area of the out-coupling grating unit cell, the greater the energy of the coupled-out light.

Furthermore, it should be noted that the area of a single out-coupling grating unit cell should not be too small, otherwise imaging becomes difficult; if too large, it cannot achieve the adjustment of the light energy within the out-coupling area 3.

The size range of the pupil-expansion grating unit cells within the pupil-expansion turning area 4 is the same as the size range of the out-coupling grating unit cells, facilitating the adjustment of the light energy in different areas within the pupil-expansion turning area 4.

Here, the out-coupling grating unit cells and the pupil-expansion grating unit cells can be one-dimensional gratings or two-dimensional gratings, and can be designed according to specific analysis of the light propagation path.

The sizes of the plurality of out-coupling grating unit cells in the out-coupling area 3 can be the same or different, and can be specifically designed according to imaging requirements to achieve reasonable adjustment of the light energy situation in different areas of the out-coupling area 3.

The shapes of the plurality of out-coupling grating unit cells in the out-coupling area 3 can be the same or different. The shapes of the out-coupling grating unit cells include, for example, rectangles and circles, and can also be polygons, super-ellipses, irregular simply connected graphics, and multiply connected graphics, etc., which are not limited in the present disclosure.

The sizes of the plurality of pupil-expansion grating unit cells in the pupil-expansion turning area 4 can be the same or different. The shapes of the plurality of pupil-expansion grating unit cells in the pupil-expansion turning area 4 can be the same or different. The shapes of the pupil-expansion grating unit cells include rectangles and circles, and can also be polygons, super-ellipses, irregular simply connected graphics, and multiply connected graphics, etc., which are not limited in the present disclosure.

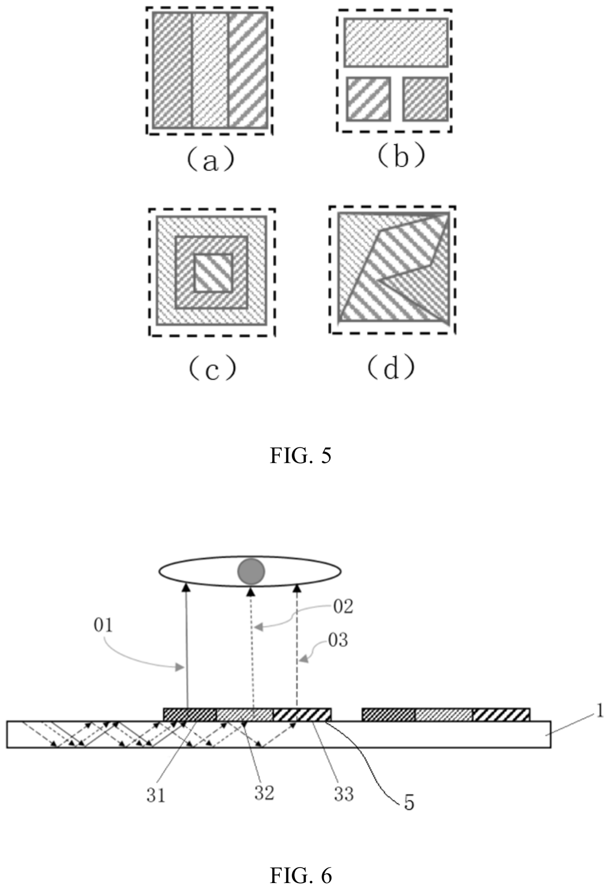

In the light-guiding structure provided by the embodiments of the present disclosure, the plurality of out-coupling grating unit cells on the waveguide substrate 1 are combined to form a combined unit cell. On this basis, the combined unit cell itself can be used as a basic unit for design. Referring to FIG. 5, FIG. 5 shows a schematic top view of some combined unit cells. The combination method of the various out-coupling grating unit cells in the combined unit cell is also flexibly variable, including but not limited to the types shown in the figures, such as a sequential combination, a triangular arrangement (e.g., two unit cells at the bottom and one at the top), a concentric frame arrangement (e.g., a larger outer frame surrounding a smaller inner frame), and an irregular graphic inlay.

In some examples of the present disclosure, referring to FIG. 6, a filter coating 5 is provided between each of the out-coupling grating unit cells and the waveguide substrate 1; wherein each type of the filter coating 5 only allows light of a corresponding one waveband to pass through; or, the out-coupling grating unit cells are holographic volume gratings.

The light coupled into the waveguide substrate 1 includes light of a plurality of different wavebands. If the plurality of out-coupling grating unit cells corresponding to the light of the plurality of different wavebands are all located on the same layer, in order to prevent crosstalk of the light of the plurality of different wavebands between the plurality of out-coupling grating unit cells, it is necessary to restrict the wavelength bandwidth response of each independent out-coupling grating unit cell.

According to the above example, one way is to provide a filter coating 5 between each of the out-coupling grating unit cells and the waveguide substrate 1, and each type of filter coating 5 only allows light of a corresponding one waveband among the plurality of different wavebands to pass through. For example, referring to FIG. 6, the filter coating 5 between the first out-coupling grating unit cell 31 and the waveguide substrate 1 only allows red light 01 to pass through, and this filter coating 5 does not allow green light 02 and blue light 03 to pass through. Thus, only the red light 01 is coupled out via the first out-coupling grating unit cell 31, and green light 02 and blue light 03 are not coupled out, nor is stray light generated.

Certainly, the out-coupling grating unit cells can also use holographic volume gratings with a very narrow wavelength bandwidth.

According to the above example, when applied to a single-layer color waveguide structure, it is possible to achieve separated propagation of light of different wavebands within the single-layer color waveguide structure, thus enabling a large FOV and high color uniformity on a single layer of waveguide layer.

Certainly, the above example is also applicable to multi-layer color waveguide structures, such as a two-layer color optical waveguide structure. Here, one layer is configured for propagating red light 01, and the other layer is configured for propagating green light 02 and blue light 03. In this case, the filter coating 5 can be provided between each out-coupling grating unit cell on the waveguide layer propagating green light 02 and blue light 03 and that layer of waveguide layer, or the out-coupling grating unit cells on that layer of waveguide layer use holographic volume gratings with a very narrow wavelength bandwidth.

Furthermore, the filter coating 5 can also be provided between each pupil-expansion grating unit cell in the pupil-expansion turning area 4 and the waveguide substrate 1, the principle being the same, and will not be discussed repeatedly.

In some examples of the present disclosure, referring to FIG. 1 and FIG. 6, the waveguide substrate 1 is a single-layer color optical waveguide structure, and the plurality of out-coupling grating unit cells are distributed discretely in a target area on one surface of the waveguide substrate 1.

According to the above example, the waveguide substrate 1 is a single-layer color waveguide structure. When light of different wavebands enters the waveguide substrate 1 via the in-coupling area 2, according to the diffraction characteristics of the in-coupling area 2, light of different wavebands will propagate to the out-coupling area 3 at different total internal reflection angles. During this process, the light undergoes pupil-expansion by the pupil-expansion turning area 4. For the single-layer color optical waveguide structure, the plurality of out-coupling grating unit cells forming the out-coupling area 3 are distributed discretely on one surface of the waveguide substrate 1, which can present a color image in the human eye 001. Moreover, because the area size of each out-coupling grating unit cell is pre-allocated, the light energy is reasonably allocated in the out-coupling area 3, which can well improve the imaging quality.

Here, a plurality of out-coupling grating unit cells are provided in the out-coupling area 3, and include identical out-coupling grating unit cells and different out-coupling grating unit cells. The identical out-coupling grating unit cells can couple out the identical light, which can be monochromatic light or multicolor light. The different out-coupling grating unit cells couple out different light, which can be monochromatic or multicolor.

According to the above example, optionally, at least two different out-coupling grating unit cells are present among the plurality of out-coupling grating unit cells, and the at least two different out-coupling grating unit cells each correspond to light of a respective one color in a virtual image.

As a preferred method in the present disclosure, each out-coupling grating unit cell on the single-layer color optical waveguide structure is designed to only couple out light of one corresponding waveband. As described earlier, this can be achieved by adding a filter coating 5 or by using holographic volume gratings, which will not be discussed in detail herein. To form a color image, the light coupled into the waveguide substrate 1 should be light of a plurality of different wavebands. In this case, out-coupling grating unit cells for coupling out light of each waveband can be correspondingly provided in the out-coupling area 3, so that light of different wavebands can all be coupled out.

It should be noted that the out-coupling area 3 is not only provided with different out-coupling grating unit cells but also provided with identical out-coupling grating unit cells; wherein the identical out-coupling grating unit cells can couple out the identical light.

In one example, referring to FIG. 6, the out-coupling area 3 comprises a plurality of first out-coupling grating unit cells 31, a plurality of second out-coupling grating unit cells 32, and a plurality of third out-coupling grating unit cells 33 distributed discretely; wherein the plurality of first out-coupling grating unit cells 31 are configured for coupling out red light 01, the plurality of second out-coupling grating unit cells 32 are configured for coupling out green light 02, and the plurality of third out-coupling grating unit cells 33 are configured for coupling out blue light 03.

According to the above example, referring to FIG. 6, the light coupled into the waveguide substrate 1 is RGB three-color light, which is emitted, for example, by a light engine, and includes red light 01, green light 02, and blue light 03. The waveguide substrate 1 is a single-layer color waveguide structure, and the out-coupling area 3 is provided on one surface of the waveguide substrate 1. These three different colors of light, after being incident on the waveguide substrate 1, can propagate via total internal reflection along different paths to the out-coupling area 3. At this time, the first out-coupling grating unit cells 31 for coupling out the red light 01, the second out-coupling grating unit cells 32 for coupling out the green light 02, and the third out-coupling grating unit cells 33 for coupling out the blue light 03 are respectively provided on the waveguide substrate 1. Furthermore, there may be one or more of each of the first out-coupling grating unit cells 31, the second out-coupling grating unit cells 32, and the third out-coupling grating unit cells 33.

Optionally, in the light-guiding structure provided by the embodiments of the present disclosure, the plurality of out-coupling grating unit cells on the waveguide substrate 1 can be combined to form a combined unit cell, and then the design can be based on the combined unit cell as the basic unit. Referring to FIG. 5, the shapes of the combined unit cells include but are not limited to the sequential combination type, triangular arrangement type, concentric frame type, irregular graphic inlay type, etc., shown in figures (a), (b), (c), and (d).

In some examples of the present disclosure, referring to FIG. 4, the waveguide substrate 1 is a multi-layer color optical waveguide structure, which includes at least two waveguide layers, and each waveguide layer is configured for totally reflecting and transmitting light of one or more wavebands coupled therein; each waveguide layer is provided with sub-out-coupling areas, each sub-out-coupling area constitutes the out-coupling area 3, and each sub-out-coupling area includes the plurality of the out-coupling grating unit cells distributed discretely; and, in a thickness direction of the waveguide substrate 1, the out-coupling grating unit cells on different waveguide layers are staggered from one another.

According to the above example, referring to FIG. 4, the waveguide substrate 1 is a multi-layer color waveguide structure. The waveguide substrate 1 includes, for example, two or more waveguide layers, wherein each layer of the waveguide layer is responsible for transmitting light of one or more different wavebands. At this time, in the partitioned grating design of the out-coupling area 3, each layer of the waveguide layer is provided with discretely distributed out-coupling grating unit cells. Meanwhile, referring to FIG. 4, the out-coupling grating unit cells on different waveguide layers are staggered from one another.

In the traditional multi-layer color optical waveguide structure, the light propagating in the waveguide layer on the side farther from the human eye must pass through the grating in the waveguide layer on the side closer to the human eye during its incidence into the human eye, thereby causing a decrease in energy of this portion of light, or even inducing stray light. However, in the technical solution of the present disclosure, gaps exist between the out-coupling grating unit cells of each layer of the waveguide layer, which may enable the out-coupling grating unit cells between different waveguide layers to be staggered from one another, thereby effectively mitigating or preventing the aforementioned problems.

In some examples of the present disclosure, referring to FIG. 4, the waveguide substrate 1 comprises a first waveguide layer 11, a second waveguide layer 12, and a third waveguide layer 13, which are stacked and are configured for propagating red light 01, green light 02, and blue light 03, respectively.

The out-coupling area 3 comprises a plurality of first out-coupling grating unit cells 31, a plurality of second out-coupling grating unit cells 32, and a plurality of third out-coupling grating unit cells 33, the first out-coupling grating unit cells 31 are provided on the first waveguide layer 11, the second out-coupling grating unit cells 32 are provided on the second waveguide layer 12, the third out-coupling grating unit cells 33 are provided on the third waveguide layer 13, and the first out-coupling grating unit cells 31, the second out-coupling grating unit cells 32, and the third out-coupling grating unit cells 33 are staggered from one another in the thickness direction of the waveguide substrate 1. The first out-coupling grating unit cells 31 are configured for coupling out the red light 01, the second out-coupling grating unit cells 32 are configured for coupling out the green light 02, and the third out-coupling grating unit cells 33 are configured for coupling out the blue light 03.

According to the above example, each layer of the waveguide layer in the waveguide substrate 1 is configured for totally reflecting and transmitting light of a respective waveband coupled into it. In this case, it is sufficient to provide, on this waveguide layer, out-coupling grating unit cells corresponding to the waveband of the coupled-in light. This light-guiding device can achieve separated propagation of light of different wavebands, thus enabling a large FOV and high color uniformity.

In some examples of the present disclosure, the waveguide substrate 1 comprises a first waveguide layer 11 and a second waveguide layer 12 which are stacked, and the first waveguide layer 11 is configured for transmitting red light 01, and the second waveguide layer 12 is configured for transmitting green light 02 and blue light 03.

The out-coupling area 3 comprises a plurality of first out-coupling grating unit cells 31, a plurality of second out-coupling grating unit cells 32 and a plurality of third out-coupling grating unit cells 33, the first out-coupling grating unit cells 31 are provided on the first waveguide layer 11, the second out-coupling grating unit cells 32 and the third out-coupling grating unit cells 33 are both provided on the second waveguide layer 12, and the first out-coupling grating unit cells 31, the second out-coupling grating unit cells 32, and the third out-coupling grating unit cells 33 are staggered from one another in the thickness direction of the waveguide substrate 1; the first out-coupling grating unit cells 31 are configured for coupling out the red light 01, and the second out-coupling grating unit cells 32 are configured for coupling out the green light 02 and the blue light 03.

According to the above example, in the multi-layer color waveguide structure, one layer of the multi-layer color waveguide structure and the second waveguide layer 12 are used to transmit light of two different wavebands, such as green light 02 and blue light 03, and then the second out-coupling grating unit cells 32 provided on the corresponding second waveguide layer 12 are designed to simultaneously couple out both the green light 02 and the blue light 03. This method can appropriately increase the FOV value while reducing the thickness of the waveguide.

In the light-guiding device provided by the embodiments of the present disclosure, the in-coupling area 2 is provided with a one-dimensional grating therein, and the gratings in the out-coupling area 3 and the pupil-expansion turning area 4 can employ one-dimensional gratings or two-dimensional gratings.

The one-dimensional grating can be one or more of surface relief gratings and holographic volume gratings. The surface relief gratings include rectangular gratings, blazed gratings, slanted gratings, stepped gratings, sinusoidal gratings, etc. The holographic volume gratings include photopolymer volume gratings, polymer dispersed liquid crystal gratings, and liquid crystal gratings, etc.

The two-dimensional grating can be a surface relief grating, and specific types are not limited to parallelogram gratings, rhombus gratings, double-rhombus gratings, etc.

To obtain better optical performance, the gratings used in the present disclosure can be designed with partitioning in parameters such as grating thickness, duty cycle, grating slant angle, coating depth, coating material, volume grating Bragg slant angle, volume grating material refractive index, etc.

According to another aspect of the embodiments of the present disclosure, an optical module is provided. The optical module includes the light-guiding device as described above and a light engine; wherein the light engine is configured for projecting light or an image into the light-guiding device.

The light emitted by the light engine is projected into the in-coupling area 2 of the light-guiding device. The light emitted by the light engine can be monochromatic light or colored light of a plurality of different wavebands.

The in-coupling area 2 can be configured for coupling the light emitted by the light engine into the waveguide substrate 1 and enabling the coupled-in light to propagate to the out-coupling area 3 in a state of total internal reflection.

The pupil-expansion turning area 4 is configured for performing pupil-expansion on the light propagated from the in-coupling area 2 and projecting the light into the out-coupling area 3. The out-coupling area 3 couples out the propagated light to form an image. Here, the special partitioned design of the out-coupling area 3 and the pupil-expansion turning area 4 makes adjusting the diffraction efficiency in different areas easier.

According to yet another aspect of the embodiments of the present disclosure, a head-mounted display device is also provided. The head-mounted display device includes a housing and the optical module as described above.

The head-mounted display device is, for example, an AR head-mounted apparatus, including AR glasses or an AR helmet, etc., which is not specifically limited in the embodiments of the present disclosure.

Specific implementations of the optical module and the head-mounted display device of the embodiments of the present disclosure can refer to the various embodiments of the light-guiding device described above, and thus have at least all the beneficial effects brought by the technical solutions of the aforementioned embodiments, which will not be repeated herein.

The above embodiments focus on the differences between the various embodiments, and the different optimization features between the various embodiments, as long as they do not contradict each other, may be combined to form a better embodiment, which will not be repeated herein taking into account the brevity of the text.

Although some specific embodiments of the present disclosure have been described in detail through examples, those skilled in the art should understand that the above examples are for illustration only and are not intended to limit the scope of the present disclosure. Those skilled in the art should understand that the above embodiments can be modified without departing from the scope and spirit of the present disclosure. The scope of the present disclosure is defined by the accompanying claims.

## Claims

1. A light-guiding device, **characterized by** comprising a waveguide substrate (1) and an in-coupling area (2) and an out-coupling area (3) provided on the waveguide substrate (1);
the in-coupling area (2) is configured for coupling light into the waveguide substrate (1) and enabling the light to propagate via total internal reflection within the waveguide substrate (1) to the out-coupling area (3);
the out-coupling area (3) is configured for coupling out the light propagating thereto, and comprises a plurality of out-coupling grating unit cells that are capable of coupling out light of one or more different wavebands, wherein the plurality of out-coupling grating unit cells form a discrete distribution within the out-coupling area (3), and wherein a gap is provided between adjacent ones of the out-coupling grating unit cells.

2. The light-guiding device according to claim 1, **characterized in that** a size of the gap is ≤ 4 mm.

3. The light-guiding device according to claim 1, **characterized in that** the waveguide substrate (1) is further provided with a pupil-expansion turning area (4), which is located between the in-coupling area (2) and the out-coupling area (3), and is configured for performing pupil-expansion on the light coupled into the waveguide substrate (1) and for propagating the light to the out-coupling area (3);
wherein the pupil-expansion turning area (4) comprises a plurality of pupil-expansion grating unit cells (41), which form a discrete distribution within the pupil-expansion turning area (4) and are capable of coupling out the light of one or more different wavebands.

4. The light-guiding device according to claim 3, **characterized in that** an area of each of the out-coupling grating unit cells and the pupil-expansion grating unit cells ranges from 0.01 mm² to 400 mm².

5. The light-guiding device according to claim 1, **characterized in that** a filter coating (5) is provided between each of the out-coupling grating unit cells and the waveguide substrate (1); wherein each type of the filter coating (5) only allows light of a corresponding one waveband to pass through; or,
the out-coupling grating unit cells are holographic volume gratings.

6. The light-guiding device according to any one of claims 1 to 5, **characterized in that** the waveguide substrate (1) is a single-layer color optical waveguide structure, and the plurality of out-coupling grating unit cells are distributed discretely in a target area on one surface of the waveguide substrate (1).

7. The light-guiding device according to claim 6, **characterized in that** at least two different out-coupling grating unit cells are present among the plurality of out-coupling grating unit cells, and the at least two different out-coupling grating unit cells each correspond to light of a respective one color in a virtual image.

8. The light-guiding device according to claim 7, **characterized in that** the out-coupling area (3) comprises a plurality of first out-coupling grating unit cells (31), a plurality of second out-coupling grating unit cells (32), and a plurality of third out-coupling grating unit cells (33) distributed discretely;
wherein the plurality of first out-coupling grating unit cells (31) are configured for coupling out red light (01), the plurality of second out-coupling grating unit cells (32) are configured for coupling out green light (02), and the plurality of third out-coupling grating unit cells (33) are configured for coupling out blue light (03).

9. The light-guiding device according to any one of claims 1 to 5, **characterized in that** the waveguide substrate (1) is a multi-layer color optical waveguide structure, which comprises at least two waveguide layers, and each waveguide layer is configured for totally reflecting and transmitting light of one or more wavebands coupled therein; and
each waveguide layer is provided with a sub-out-coupling area, each sub-out-coupling area constitutes the out-coupling area (3), and each sub-out-coupling area comprises the plurality of the out-coupling grating unit cells distributed discretely; and, in a thickness direction of the waveguide substrate (1), the out-coupling grating unit cells on different waveguide layers are staggered from one another.

10. The light-guiding device according to claim 9, **characterized in that** the waveguide substrate (1) comprises a first waveguide layer (11), a second waveguide layer (12), and a third waveguide layer (13), which are stacked and are configured for propagating red light (01), green light (02), and blue light (03), respectively;
the out-coupling area (3) comprises a plurality of first out-coupling grating unit cells (31), a plurality of second out-coupling grating unit cells (32), and a plurality of third out-coupling grating unit cells (33), the first out-coupling grating unit cells (31) are provided on the first waveguide layer (11), the second out-coupling grating unit cells (32) are provided on the second waveguide layer (12), the third out-coupling grating unit cells (33) are provided on the third waveguide layer (13), and the first out-coupling grating unit cells (31), the second out-coupling grating unit cells (32), and the third out-coupling grating unit cells (33) are staggered from one another in the thickness direction of the waveguide substrate (1); and
the first out-coupling grating unit cells (31) are configured for coupling out the red light (01), the second out-coupling grating unit cells (32) are configured for coupling out the green light (02), and the third out-coupling grating unit cells (33) are configured for coupling out the blue light (03).

11. The light-guiding device according to claim 10, **characterized in that** the waveguide substrate (1) comprises a first waveguide layer (11) and a second waveguide layer (12) which are stacked, and the first waveguide layer (11) is configured for transmitting red light (01), and the second waveguide layer (12) is configured for transmitting green light (02) and blue light (03);
the out-coupling area (3) comprises a plurality of first out-coupling grating unit cells (31) and a plurality of second out-coupling grating unit cells (32), the first out-coupling grating unit cells (31) are provided on the first waveguide layer (11), the second out-coupling grating unit cells (32) and the third out-coupling grating unit cells (33) are both provided on the second waveguide layer (12), and the first out-coupling grating unit cells (31), the second out-coupling grating unit cells (32), and the third out-coupling grating unit cells (33) are staggered from one another in the thickness direction of the waveguide substrate (1); and
the first out-coupling grating unit cells (31) are configured for coupling out the red light (01), and the second out-coupling grating unit cells (32) are configured for coupling out the green light (02) and the blue light (03).

12. An optical module, **characterized by** comprising:
the light-guiding device according to any one of claims 1 to 11; and
a light engine configured for projecting light or an image into the light-guiding device.

13. A head-mounted display device, **characterized by** comprising:
a housing; and
the optical module according to claim 12.
